(19) Europäisches Patentamt
European Patent Office
Office européen des brevets

(11) **EP 4 391 688 A1**

(12) **EUROPEAN PATENT APPLICATION**
published in accordance with Art. 153(4) EPC

(43) Date of publication:
**26.06.2024 Bulletin 2024/26**

(21) Application number: **22858461.1**

(22) Date of filing: **16.08.2022**

(51) International Patent Classification (IPC):
**H04W 72/20** (2023.01)   **H04W 72/044** (2023.01)

(52) Cooperative Patent Classification (CPC):
**H04W 72/044; H04W 72/20**

(86) International application number:
**PCT/JP2022/030935**

(87) International publication number:
**WO 2023/022143 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2021 JP 2021132415**

(71) Applicant: **NTT DOCOMO, INC.**
**Tokyo 100-6150 (JP)**

(72) Inventors:
• **SHIBAIKE, Naoya**
**Tokyo 100-6150 (JP)**
• **MATSUMURA, Yuki**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to an aspect of the present disclosure includes: a receiving section that receives a notification of at least one of a radio resource control (RRC) information element (IE), a medium access control (MAC) control element (CE), and downlink control information (DCI); and a control section that determines, on the basis of the notification, one or more parameters for transmission in one partial band of a plurality of partial bands obtained by dividing a band for a sounding reference signal (SRS), in which the one or more parameters are at least one of a number of the plurality of partial bands, an index of the one partial band, and a start resource block index of the one partial band. According to an aspect of the present disclosure, an SRS using a partial band can be appropriately transmitted.

```
SRS-ResourceSet ::=   SEQUENCE {
    [...]
    resourceType              CHOICE {
        aperiodic             SEQUENCE {
            aperiodicSRS-ResourceTrigger   INTEGER (1..maxNrofSRS-TriggerStates-1),
            csi-RS                         NZP-CSI-RS-ResourceId  OPTIONAL, -- Cond NonCodebook
            slotOffset                     INTEGER (1..32)        OPTIONAL, -- Need S
            ...,
            [[
            aperiodicSRS-ResourceTriggerList   SEQUENCE (SIZE(1..maxNrofSRS-TriggerStates-2))
                                               OF INTEGER (1..maxNrofSRS-TriggerStates-1)
                                               OPTIONAL  -- Need M
            P_F   INTEGER (1, 2, 3, 4, 8, 12, 16),
            k_F   INTEGER (1..16)
            ]]
        },
    [...]
```

FIG. 7

EP 4 391 688 A1

## Description

Technical Field

The present disclosure relates to a terminal, a radio communication method, and a base station in next-generation mobile communication systems.

Background Art

In a universal mobile telecommunications system (UMTS) network, specifications of long term evolution (LTE) have been drafted for the purpose of further increasing data rates, providing low delay, and the like (Non Patent Literature 1). In addition, the specifications of LTE-Advanced (3GPP releases (Rels.) 10 to 14) have been drafted for the purpose of further increasing capacity and advancement of LTE (third generation partnership project (3GPP) Rels. 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

In the existing LTE systems (for example, 3GPP Rels. 8 to 14), a user terminal (user equipment (UE)) uses at least one of a UL data channel (for example, physical uplink shared channel (PUSCH)) or a UL control channel (for example, physical uplink control channel (PUCCH)) to transmit uplink control information (UCI).

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

Enhancement of a sounding reference signal has been studied in a future radio communication system (for example, NR).

However, in the enhancement of the SRS, a method of configuring/indicating the SRS transmission using a partial band is not clear. When such a calculation method is not clear, deterioration of communication quality, communication throughput, and the like may be caused.

Therefore, an object of the present disclosure is to provide a terminal, a radio communication method, and a base station that appropriately transmit an SRS using a partial band.

Solution to Problem

A terminal according to an aspect of the present disclosure includes: a receiving section that receives a notification of at least one of a radio resource control (RRC) information element (IE), a medium access control (MAC) control element (CE), and downlink control information (DCI); and a control section that determines, on the basis of the notification, one or more parameters for transmission in one partial band of a plurality of partial bands obtained by dividing a band for a sounding reference signal (SRS), in which the one or more parameters are at least one of a number of the plurality of partial bands, an index of the one partial band, and a start resource block index of the one partial band.

Advantageous Effects of Invention

According to an aspect of the present disclosure, an SRS using a partial band can be appropriately transmitted.

Brief Description of Drawings

Fig. 1 is a diagram illustrating an example of an SRS band configuration.
Fig. 2 is a diagram illustrating an example of a band of SRS frequency hopping.
Fig. 3 is a diagram illustrating an example of SRS frequency hopping.
Fig. 4 is a diagram illustrating another example of SRS frequency hopping.
Fig. 5 is a diagram illustrating an example of an RPFS SRS.
Fig. 6 is a diagram illustrating an example of a partial band of an RPFS SRS.
Fig. 7 is a diagram illustrating an example of a specific RRC IE.
Fig. 8 is a diagram illustrating another example of a specific RRC IE.
Figs. 9A and 9B are diagrams illustrating an example of a new MAC CE.
Figs. 10A and 10B are diagrams illustrating an example of an existing MAC CE.
Figs. 11A and 11B are diagrams illustrating an example of a third embodiment.
Fig. 12 is a diagram illustrating an example of a schematic configuration of a radio communication system according to one embodiment.
Fig. 13 is a diagram illustrating an example of a configuration of a base station according to one embodiment.
Fig. 14 is a diagram illustrating an example of a configuration of a user terminal according to one embodiment.
Fig. 15 is a diagram illustrating an example of a hardware configuration of a base station and a user terminal according to one embodiment.

Description of Embodiments

(SRS)

In the NR, a sounding reference signal (SRS) has a wide range of usages. The SRS of the NR is used not only for uplink (UL) CSI measurement also used in existing LTE (LTE Rel. 8 to 14) but also for downlink (DL) CSI measurement, beam management and the like.

In the UE, one or a plurality of SRS resources may be configured. The SRS resource may be specified by an SRS resource index (SRI).

Each SRS resource may include one or a plurality of SRS ports (may correspond to one or a plurality of SRS ports). For example, the number of ports of each SRS may be one, two, four and the like.

In the UE, one or a plurality of SRS resource sets may be configured. One SRS resource set may be associated with a given number of SRS resources. The UE may commonly use a higher layer parameter for the SRS resources included in one SRS resource set. Note that, in the present disclosure, the resource set may be replaced with a set, a resource group, a group and the like.

Information regarding the SRS resource or resource set may be configured in the UE by using higher layer signaling, physical layer signaling (e.g., downlink control information (DCI)), or a combination thereof.

The SRS configuration information (for example, an RRC information element "SRS-Config") may include SRS resource set configuration information, SRS resource configuration information and the like.

The SRS resource set configuration information (e.g., the RRC parameter "SRS-ResourceSet") may include information of an SRS resource set identifier (ID) (SRS-ResourceSetId), a list of SRS resource IDs (SRS-ResourceId) used in the resource set, an SRS resource type, SRS usage, and the like.

Here, the SRS resource type may indicate any one of a periodic SRS (P-SRS), a semi-persistent SRS (SP-SRS), and an aperiodic SRS (A-SRS). Note that the UE may transmit the P-SRS and SP-SRS periodically (or periodically after activation). The UE may transmit the A-SRS on the basis of the SRS request of the DCI.

In addition, the SRS usage (the RRC parameter "usage" or the Layer-1 (L1) parameter "SRS-SetUse") may be, for example, beam management, codebook, non-codebook, antenna switching, or the like. An SRS used for codebook or non-codebook may be used to determine a precoder for codebook-based or non-codebook-based physical uplink shared channel (PUSCH) transmission based on an SRI.

For an SRS used for beam management, it may be assumed that only one SRS resource per SRS resource set can be transmitted at a given time instant.

Note that, when a plurality of SRS resources belong to different SRS resource sets, these SRS resources may be transmitted at the same time.

The SRS resource configuration information (e.g., the RRC parameter "SRS-Resource") may include information regarding an SRS resource ID (SRS-ResourceId), the number of SRS ports, the SRS port numbers, a transmission comb, SRS resource mapping (such as a time and/or frequency resource position, a resource offset, a resource period, the number of repetitions, the number of SRS symbols, an SRS bandwidth, and the like), hopping, an SRS resource type, a sequence ID, spatial relation, and the like.

The UE may transmit the SRS in adjacent symbols as many as the SRS symbols out of last six symbols in one slot. Note that the number of SRS symbols may be one, two, or four, for example.

The UE may switch bandwidth parts (BWPs) to transmit an SRS or may switch antennas slot by slot. In addition, the UE may apply at least one of in-slot hopping and inter-slot hopping to the SRS transmission.

The multiplexing number in the frequency direction may be 12 when a cyclic shift is used, and may be 4 when a comb is used.

(SRS Bandwidth Configuration)

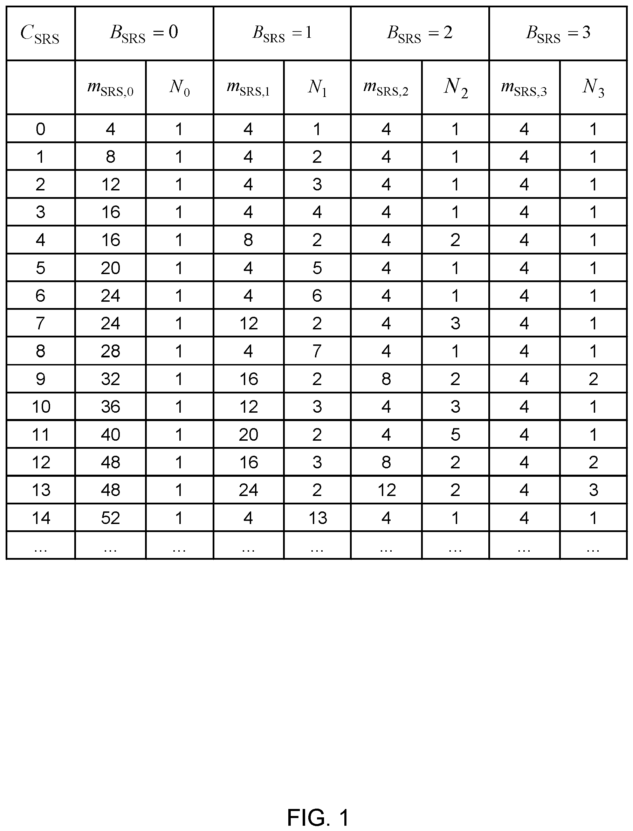

The SRS bandwidth is defined in the specifications of Rel. 16. $C_{SRS} \in \{0,...,63\}$ (configuration index, row index) and $B_{SRS} \in \{0,1,2,3\}$ (the number of boundaries of the bandwidth division) are configured by using higher layer signaling, and the SRS bandwidth is determined by using the table (association, mapping) in Fig. 1.

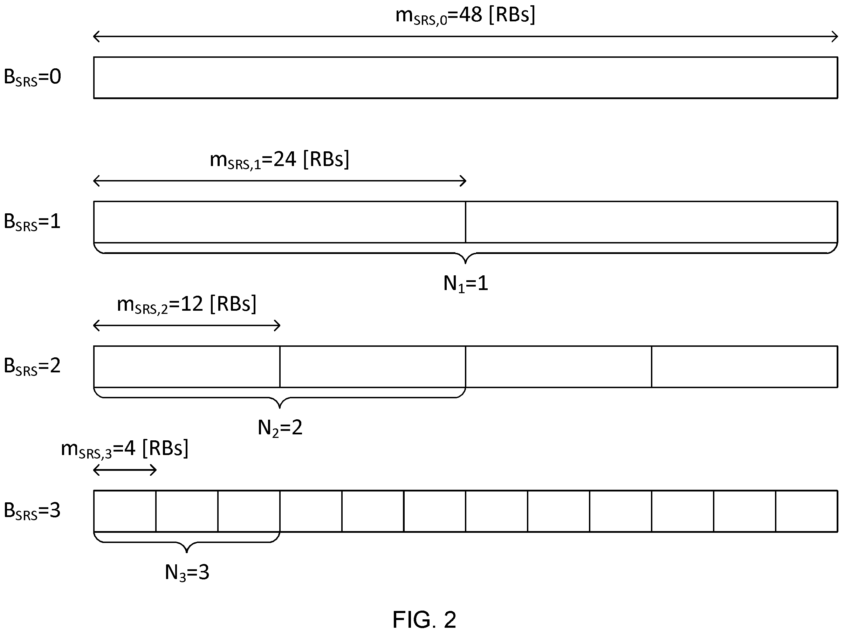

As in the example of Fig. 2, using the $B_{SRS}$, the available bandwidth is divided into several parts. The plurality of parts is used for SRS hopping. The $C_{SRS}$ configures a set of SRS bands. The $B_{SRS}$ selects one bandwidth in the configured set. This example indicates a case where $C_{SRS} = 13$. All candidate values of an SRS bandwidth $m_{SRS,b}$ (the number of RBs) are multiples of 4. The $B_{SRS}$ divides the available bandwidth into a plurality of parts. The larger the $B_{SRS}$, the larger the number of frequency sections

(the smaller the size of the frequency sections).

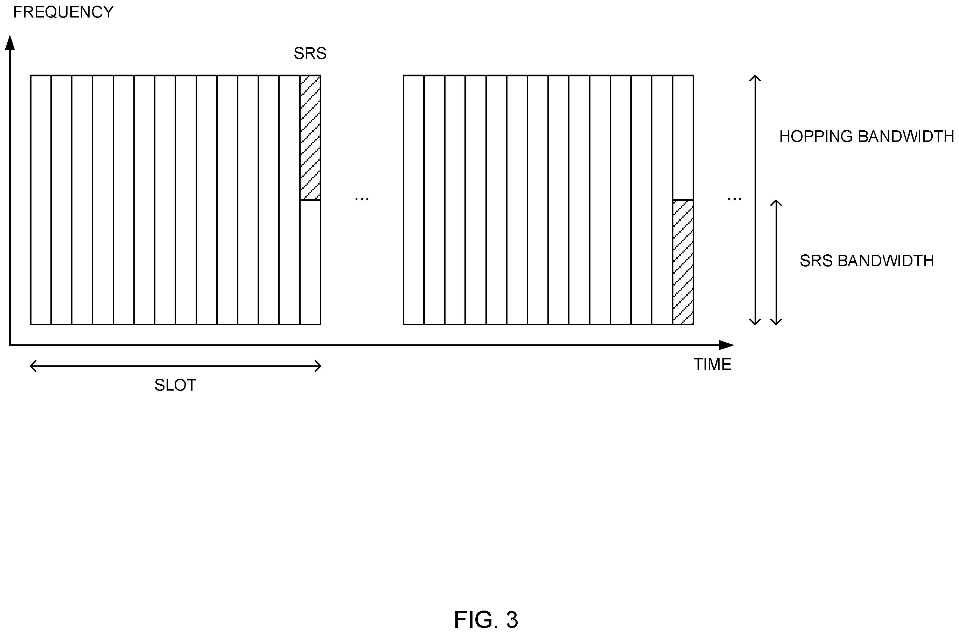

A parameter $b_{hop} \in \{0,1,2,3\}$ is configured for SRS frequency hopping. In the case of $b_{hop} < B_{SRS}$, SRS frequency hopping is enabled. As illustrated in the example of Fig. 3, the SRS is transmitted using the SRS band in the band (hopping band) given to the SRS frequency hopping.

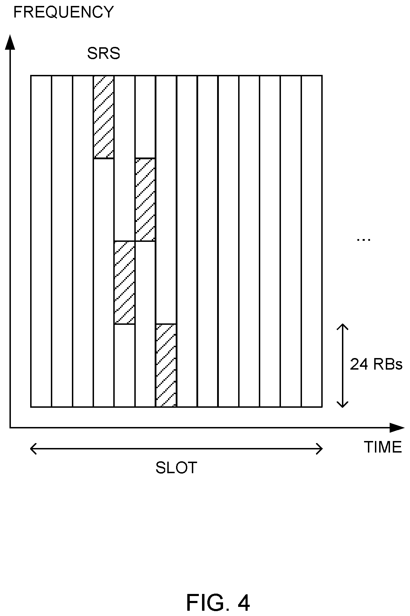

Fig. 4 illustrates an example of SRS frequency hopping when $C_{SRS} = 24$, $b_{hop} = 0$, $B_{SRS} = 2$, and $N_{symb}^{SRS} = 4$. In the band (hopping band) given to the SRS frequency hopping, the SRS having the SRS band $m_{SRS,b}$ (24 RBs in this example) is transmitted.

Resource block (RB)-level partial frequency sounding (RPFS) using an SRS has been studied.

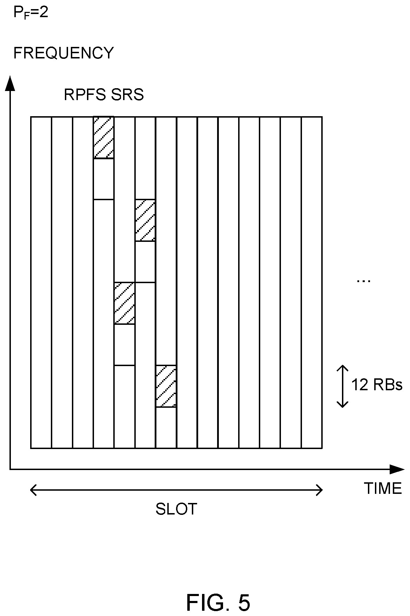

Fig. 5 illustrates an example of RPFS SRS frequency hopping in the case of the number of parts $P_F$ = 2 in addition to the configuration of Fig. 4. At each hop, SRS transmissions may be performed over $1/P_F$ bandwidth of the available bandwidth (12 RBs in this example).

Start RB indexes of $1/P_F*m_{SRS,BSRS}$ RBs among $m_{SRS,BSRS}$ RBs may be given by the formula below.

$$N_{offset} = k_F/P_F*m_{SRS,BSRS} \quad \text{(Formula 1)}$$

Here, $k_F=\{0,...,P_F-1\}$ may be satisfied.

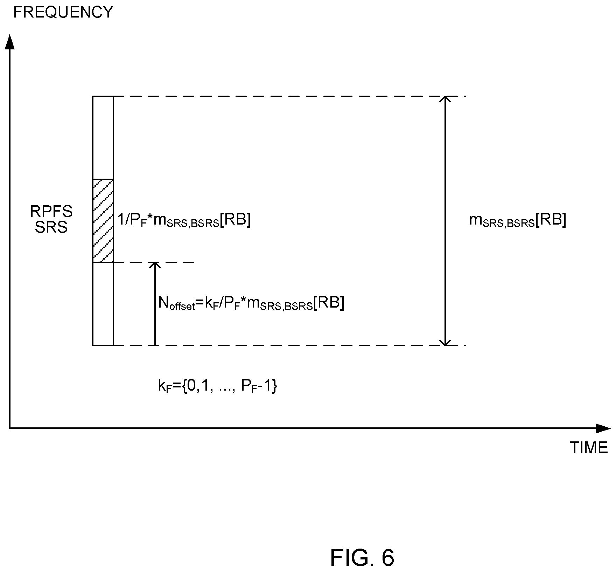

In the example of Fig. 6, the existing SRS full band $m_{SRS,BSRS}$ is divided into $P_F$ partial bands (bandwidth $1/P_F*m_{SRS,BSRS}$). A start RB index (partial band offset) of one partial band is $N_{offset}$.

The RPFS SRS provides a method for increasing the power per subcarrier since partial band sounding allocates the available transmission power in a section of smaller bandwidth as compared to full band sounding. Further, the SRS capacity can be enhanced by giving the network an occasion to multiplex more UE ports on the remaining frequency resources. As compared with a case where a narrow band is allocated by existing (Rel. 16) SRS transmission, it is possible to sound a wide band by using a smaller number of times.

With the existing SRS, a frequency domain starting position $k_0^{pi}$ is given by the calculation formula below.

$$k_0^{pi} = k_{-0}^{pi} + \Sigma_{b=0}^{BSRS} K_{TC} M_{SC,b}^{SRS} n_b$$

In the present disclosure, k- represents a variable in which k is overlined, and may also be referred to as a k bar.

The RPFS may support $P_F = \{2,4\}$

At least one of Bandwidths 1 to 4 below may be supported for the bandwidth $1/P_F*m_{SRS,BSRS}$ [RB] of the RPFS.

[Bandwidth 1] $1/P_F*m_{SRS,BSRS}$ is an integer value.
[Bandwidth 2] $1/P_F*m_{SRS,BSRS}$ is an integer value of a minimum value 4.
[Bandwidth 3] $1/P_F*m_{SRS,BSRS}$ is a multiple of 4.
[Bandwidth 4] In Option 1 or 2, $1/P_F*m_{SRS,BSRS}$ is rounded to a multiple of 4 (round function, rounding).

The RPFS SRS employs Sequence Generation 1 or 2 below, and a sequence length other than the sequence length supported in the existing specifications may not be introduced.

[Sequence Generation 1] The UE generates a Zadoff-Chu (ZC) sequence having a length of $12/P_F*m_{SRS,BSRS}$/Comb.
[Sequence Generation 2] The UE truncates the sequence of a length of $12*m_{SRS,BSRS}$/Comb.

Regarding the configurability of the resource of the RPFS SRS and the on/off (enable/disable) of the RPFS SRS function, for example, in Cases 1 and 2 below, there is a possibility that a change of the RRC level (reconfiguration, frequency, semi-static) is not sufficient.

[Case 1] The full band SRS (existing SRS, full BW SRS) and the RPFS SRS are switched according to path loss.
[Case 2] The band of the RPFS SRS is increased or decreased according to path loss.

When the RPFS SRS configuration is not appropriately changed, the communication quality, the communication throughput, and the like may be deteriorated.

Therefore, the present inventors have conceived a method of changing the RPFS SRS configuration.

Hereinafter, embodiments according to the present disclosure will be described in detail with reference to the drawings. Radio communication methods according to the respective embodiments may be applied independently, or may be applied in combination.

In the present disclosure, "A/B/C" and "at least one of A, B and C" may be replaced with each other. In the present disclosure, the cell, the serving cell, the CC, the carrier, the BWP, the DL BWP, the UL BWP, the active DL BWP, the active UL BWP, and the band may be replaced with each other. In the present disclosure, the index, the ID, the indicator, and the resource ID may be replaced with each other. In the present disclosure, the sequence, the list, the set, the group, the cohort, the cluster, the subset, and the like may be replaced with each other. In the present disclosure, support, control, controllable, operate, and operable may be replaced with each other.

In the present disclosure, configure, activate, update, indicate, enable, specify, and select may be replaced with each other.

In the present disclosure, the higher layer signaling may be any of, for example, radio resource control (RRC) signaling, medium access control (MAC) signaling, broadcast information, and the like, or a combination thereof. In the present disclosure, the RRC, the RRC signaling, the RRC parameter, the higher layer parameter, the RRC information element (IE), the RRC message, the configuration may be replaced with each other.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

In the present disclosure, the partial frequency sounding (PFS), the RB-level partial frequency sounding (RPFS), the new SRS, and the SRS after Rel. 17 may be replaced with each other.

In the present disclosure, the partial band, the part, the RPFS SRS band, the band having a part of the SRS bandwidth, the number of RBs used for SRS transmission, the band used for one hop, and $1/P_F*m_{SRS,BSRS}$ RBs among $m_{SRS,BSRS}$ RBs may be replaced with each other. In the present disclosure, the partial bandwidth, the RPFS SRS bandwidth, and the width of the partial band may be replaced with each other.

In the present disclosure, the RPFS SRS sequence length, the number of subcarriers used for SRS transmission, and the number of subcarriers used for one hop may be replaced with each other.

In the present disclosure, the frequency domain starting position may be replaced with the RPFS SRS frequency domain starting position and the frequency domain starting position of each hop.

In the present disclosure, $\bar{k}_0^{pi}$ may be a frequency domain starting position based on comb configuration (transmissioncomb, comb value (spacing, the number of subcarriers), comb offset (the number of subcarriers)). In the present disclosure, $K_{TC}$ may be a comb value (spacing, the number of subcarriers) based on a comb configuration (transmissioncomb), and Comb. In the present disclosure, $\Sigma_{b=0}^{BSRS}x_b$ may be a sum of $x_b$ with respect to b = 0,1,...,$B_{SRS}$.

In the present disclosure, floor(x,y) is a multiple of maximum y not exceeding x, and may be expressed as floor(x/y)*y. In the present disclosure, the floor function, the ceil (ceiling) function, and the round function may be replaced with each other. In the present disclosure, $P_F$, the number of parts, and the first number may be replaced with each other. In the present disclosure, X and the second number may be replaced with each other. In the present disclosure, M and the lower limit value may be replaced with each other.

In the present disclosure, the specific variable, the parameter, the one or more specific variables, the one or more parameters, the first specific variable, the second specific variable, and at least one of the number of partial bands $P_F$, the partial band index $k_F$, and the start RB index $N_{offset}$ may be replaced with each other.

In the present disclosure, the plurality of candidate values, the plurality of values, and the list may be replaced with each other.

(Radio Communication Method)

The configuration/indication/update of the RPFS SRS is notified to the UE using RRC information element (IE)/MAC CE/DCI.

The UE may receive a notification of at least one of a radio resource control (RRC) information element (IE), a medium access control (MAC) control element (CE), and downlink control information (DCI). The UE may determine, on the basis of the notification, one or more parameters for transmission in one partial band of a plurality of partial bands obtained by dividing a band for a sounding reference signal (SRS). The one or more parameters may be at least one of the number of the plurality of partial bands (for example, $P_F$), an index of the one partial band (for example, $k_F$), and the start resource block index of the one partial band (for example, $N_{offset}$).

<First Embodiment>

This embodiment relates to configuring/indicating/updating an RPFS SRS using a combination of an RRC IE and DCI.

The specific RRC IE related to the SRS resource configuration includes the specific variable regarding the RPFS band determination, and the DCI indicates/selects the specific RRC IE, so that the UE may determine the value of the specific variable.

<<Aspect 1-1>>

The specific RRC IE may be at least one of those described below.

- SRS resource information element (SRS-Resource)
- SRS resource set information element (SRS-ResourceSet)
- SRS positioning resource information element (SRS-PosResource)
- SRS positioning resource set information element (SRS-PosResourceSet)

<<Aspect 1-2>>

The specific variable may be at least one of those described below.

- $P_F$ (in the case of obtaining the SRS band [RB], variables used for dividing the existing SRS band $m_{SRS,BSRS}$, the number of partial bands obtained by dividing the existing SRS full band (the number of partial bands))
- $k_F$ (an index (partial band index) indicating which partial band among $P_F$ partial bands obtained by dividing using $P_F$ within the existing SRS full band, $k_F$ = {0,...,$P_F$-1})
- $N_{offset}$ (start resource block index of partial band)

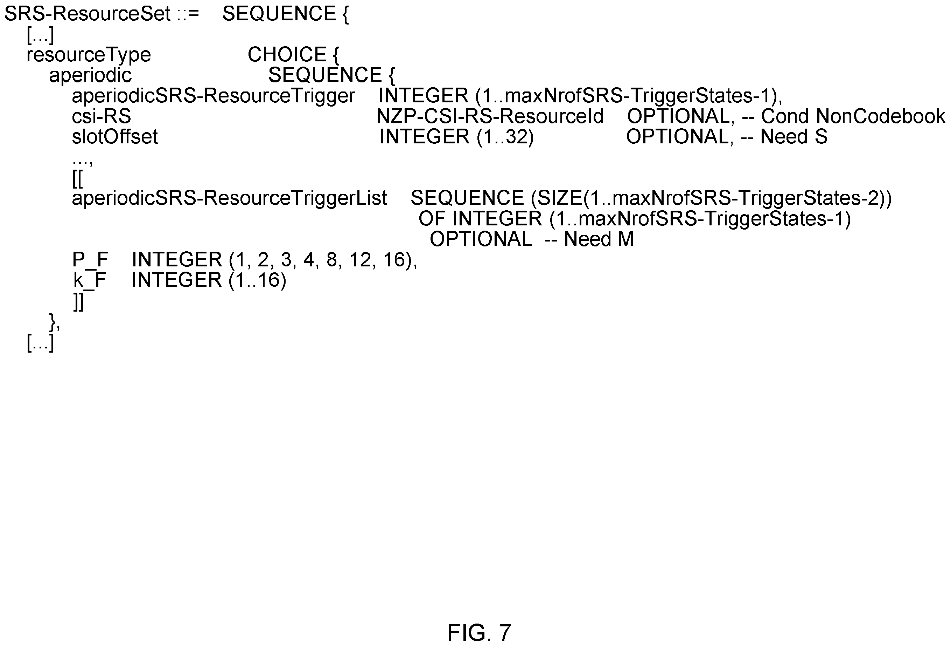

Fig. 7 is a diagram illustrating an example of a specific RRC IE. In this example, the specific RRC IE is the SRS resource set information element (SRS-ResourceSet), and the specific variables are the number of partial bands $P_F$ and the partial band index $k_F$.

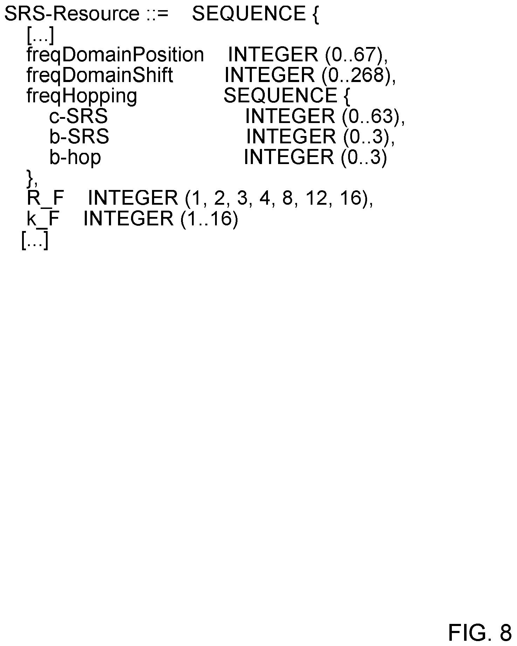

Fig. 8 is a diagram illustrating another example of a specific RRC IE. In this example, the specific RRC IE is the SRS resource information element (SRS-Resource), and the specific variables are the number of partial bands $P_F$ and the partial band index $k_F$.

<<Aspect 1-3>>

That the DCI indicates/selects the specific RRC IE may be as described below.

- The field of SRS resource indicator/SRS request in DCI format 0_1/0_2/1_1/1_2 indicates/selects an index (SRS resource/SRS resource set corresponding to the index) of aperiodicSRS-ResourceTrigger/aperiodicSRS-ResourceTriggerList/SRS-Resource/SRS-PosResource/SRS-ResourceSet/SRS-PosResourceSet.

According to this embodiment, the SRS transmission bandwidth/allocation resources can be flexibly configured/indicated/updated according to dynamically changeable conditions. In addition, the RPFS SRS band can be configured/indicated according to the SRS resource/SRS resource set without increasing the notification bit of the DCI.

<Second Embodiment>

This embodiment relates to configuring/indicating/updating an RPFS SRS using a combination of an RRC IE and a MAC CE.

The specific RRC IE related to the SRS resource configuration may include a plurality of candidate values of the specific variable regarding the RPFS band determination, and the UE may determine/select one or more candidate values of the specific variable on the basis of the MAC CE.

<<Aspect 2-1>>

The MAC CE may indicate/select one or more candidate values among the plurality of candidate values of the specific variable.

A list of a plurality of candidate values of the specific variable may be included for each specific RRC IE (for example, the SRS resource/SRS resource set).

The MAC CE may indicate/select one or more candidate values within the list.

The UE may use a default value before the notification (reception) of the MAC CE. The UE may determine/select one default value from the list in the specific RRC IE according to at least one of Selection Rules 1 to 5 below.

[Selection Rule 1] The default value is the smallest candidate value (for example, 1) in the list.
[Selection Rule 2] The default value is a candidate value associated with the smallest index value (for example, 0) in the list.
[Selection Rule 3] The default value is the largest candidate value (for example, X) in the list.
[Selection Rule 4] The default value is a candidate value associated with the largest index value (for example, Y) in the list.
[Selection Rule 5] The default value is configured using the RRC IE.

<<Aspect 2-2>>

The list of candidate values and the specific value for the specific variable are configured by using the RRC IE, and the MAC CE may update the specific value.

The MAC CE that updates the specific value may be a newly defined MAC CE (new MAC CE). The new MAC CE may notify/indicate update of the number of partial bands $P_F$/the partial band index $k_F$.

The MAC CE that updates the specific value may be a MAC CE of Rel. 15/16 (existing MAC CE). For example, the existing MAC CE may be an SRS path loss reference RS update MAC CE.

<<Aspect 2-3>>

Full band sounding (existing SRS band allocation) and partial band sounding (RPFS SRS allocation) may be switched by the MAC CE.

The UE may be configured with the RPFS SRS (RPFS SRS band allocation) using the RRC IE and fall back to the existing SRS (existing

SRS band allocation) on the basis of the MAC CE notification. On the basis of a specific field in the MAC CE, the UE may determine this fallback. The specific field (for example, P field) may be 1 bit. The specific field may indicate whether to apply the RPFS SRS function (on/off).

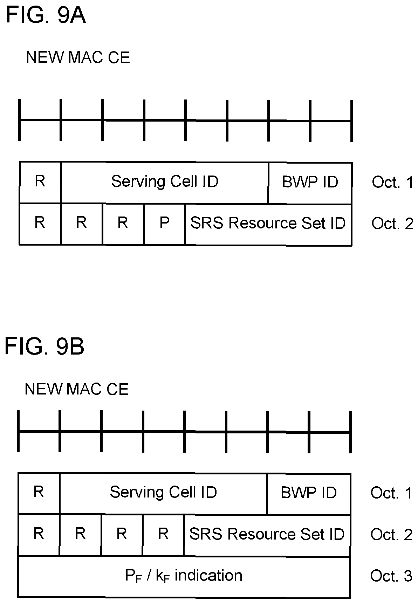

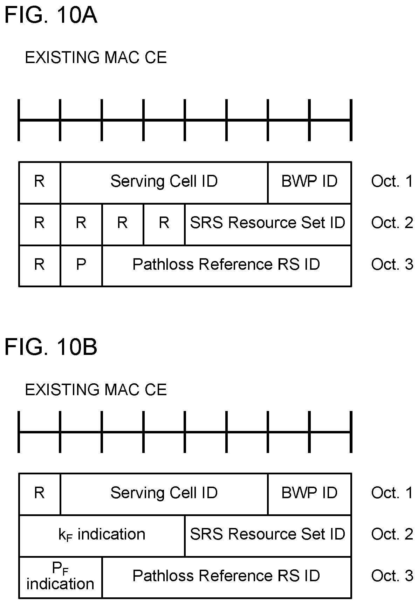

As in the example of Fig. 9A, the new MAC CE may include a serving cell ID field, a BWP ID field, a P field, and an SRS resource set ID field. As in the example of Fig. 10A, the existing MAC CE may include a serving cell ID field, a BWP ID field, an SRS resource set ID field, a P field, and a path loss reference RS ID field. For example, the UE may determine fallback to the existing SRS band allocation on the basis of P = 1 in the MAC CE.

As in the example of Fig. 9B, the new MAC CE may include a serving cell ID field, a BWP ID field, a P field, an SRS resource set ID field, and a specific variable indication field (for example, the number of partial bands $P_F$/partial band index $k_F$ indication field). The specific variable indication field may indicate a specific value of the specific variable or an index associated with the specific value of the specific variable. As in the example of Fig. 10B, the existing MAC CE may include a serving cell ID field, a BWP ID field, a first specific variable indication field (for example, the partial band index $k_F$ indication field), an SRS resource set ID field, a P field, a second specific variable indication field (for example, the number of partial bands $P_F$ indication field), and a path loss reference RS ID field. The first specific variable indication field/second specific variable indication field may indicate a specific value of the specific variable or an index associated with the specific value of the specific variable. The value of the specific variable may be updated to the specific value according to the specific variable indication field/the first specific variable indication field/the second specific variable indication field.

According to this embodiment, the SRS transmission bandwidth/allocation resources can be flexibly configured/indicated/updated according to dynamically changeable conditions.

<Third Embodiment>

This embodiment relates to configuring/indicating/updating an RPFS SRS using DCI.

The RPFS SRS may be controlled using an SRS request field in DCI format 1_1/1_2.

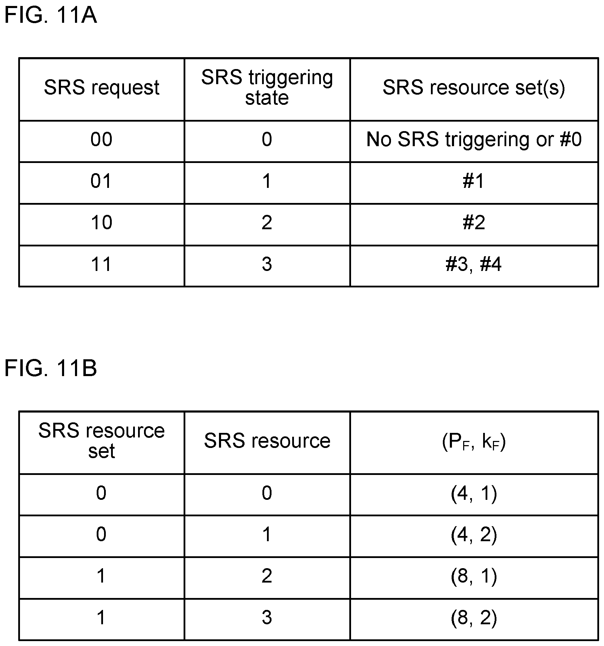

The specific variable (for example, the number of partial bands $P_F$/the partial band index $k_F$) may be configured/indicated for each SRS resource or SRS resource set using the RRC IE/MAC CE. As in the example of Fig. 11B, by configuring different specific variable values (for example, $(P_F, k_F)$) to the SRS resource set/SRS resource, the specific variable can be controlled using the SRS request field. As in Fig. 11A, a plurality of SRS resource sets/SRS resources may be associated with different SRS triggering states.

Using the RRC IE/MAC CE, different values (for example, {0,1,2,...}) of the SRS triggering state (SRSTriggeringState) may be configured for each SRS resource or SRS resource set.

As in the example of Fig. 11A, the SRS request field value, the SRS triggering state, and the SRS resource set may be associated. The SRS request field value = 00 may mean that the SRS is not triggered. A DCI format that does not include data scheduling or CSI triggering may trigger the SRS. The DCI may trigger the SRS resource set by using an SRS request field value = 00. The SRS request field value = 00 in the DCI format including at least one of data scheduling and CSI triggering may mean that the SRS is not triggered, and the SRS request field value = 00 in the DCI format not including data scheduling or CSI triggering may mean that SRS resource set #0 is triggered.

A DCI format including at least one of data scheduling and CSI triggering and a DCI format not including data scheduling or CSI triggering may be distinguished by whether or not having a CRC scrambled by using a specific radio network temporally indicator (RNTI) (new RNTI to existing RNTI), or may be distinguished by whether or not one or more special fields are special values. The size of the DCI format including at least one of data scheduling and CSI triggering and the size of the DCI format not including data scheduling or CSI triggering may be equal.

According to this embodiment, the SRS transmission bandwidth/allocation resources can be flexibly configured/indicated/updated according to dynamically changeable conditions. In addition, according to this embodiment, the specific variable can be appropriately indicated/controlled using the SRS request field in the DCI.

<Other Embodiments>

<<Combination of Plurality of Embodiments>>

At least two of the foregoing first to third embodiments may be combined.

One SRS resource set may be notified/indicated by using the DCI as in the third embodiment from one or more SRS resource sets selected/activated by using the MAC CE among a plurality of SRS resource sets configured by using the RRC IE as in the second embodiment. The value notified by the DCI may be indexed in order of the SRS resource set ID to one or more SRS resource sets configured by using the RRC IE and selected/activated by using the MAC CE. The DCI may indicate its index.

<<Specific Variable>>

In the present disclosure, the partial band index $k_F$ and the partial band offset (start RB index) $N_{offset}$ may be replaced with each other. In the conversion between $k_F$ and $N_{offset}$, Formula 1 described above may be used.

<<UE Capability/Higher Layer Parameter>>

A higher layer parameter (RRC information element)/UE capability corresponding to a function (feature) in at least one of the above embodiments may be defined. The UE capability may indicate whether to support this function.

The UE in which the higher layer parameter corresponding to the function is configured may perform the function. "The UE in which the higher layer parameter corresponding to the function is not configured does not perform the function (for example, application of the operation of Rel. 15/16)" may be defined.

The UE that has reported the UE capability indicating support for the function may perform the function. "The UE that does not report the UE capability indicating support for the function does not perform the function (for example, application of the operation of Rel. 15/16)" may be defined.

When the UE reports the UE capability indicating to support the function, and a higher layer parameter corresponding to the function is configured, the UE may perform the function. "When the UE does not report the UE capability indicating to support the function or the higher layer parameter corresponding to the function is not configured, the UE does not perform the function (for example, application of the operation of Rel. 15/16)" may be defined.

The UE capability may indicate whether to support transmission of the RPFS SRS.

The UE capability may indicate a maximum number of the number of partial bands $P_F$ supported by the UE.

The UE capability may indicate whether or not to support the specific variable being dynamically changed by using the MAC CE/DCI. The specific variable may be the number of partial bands $P_F$/the partial band index $k_F$.

With the above UE capability/higher layer parameters, the UE can realize the above functions while maintaining compatibility with the existing specifications.

(Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

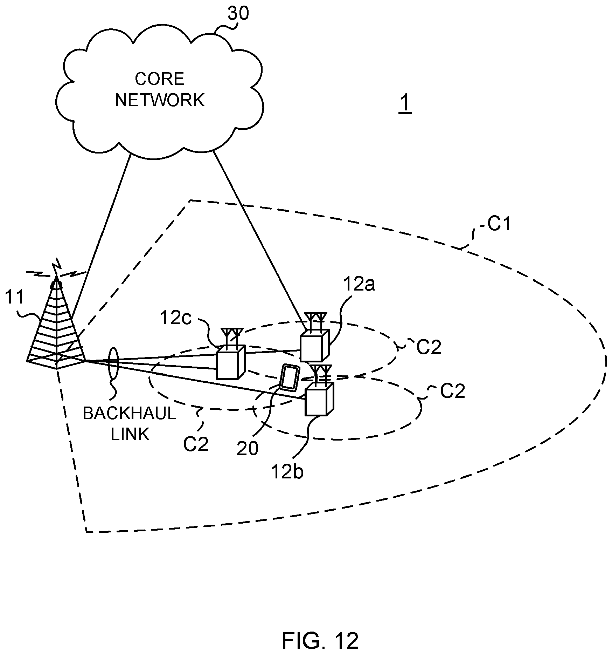

Fig. 12 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

In addition, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

In addition, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

In addition, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. In addition, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". In addition, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

In addition, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

(Base Station)

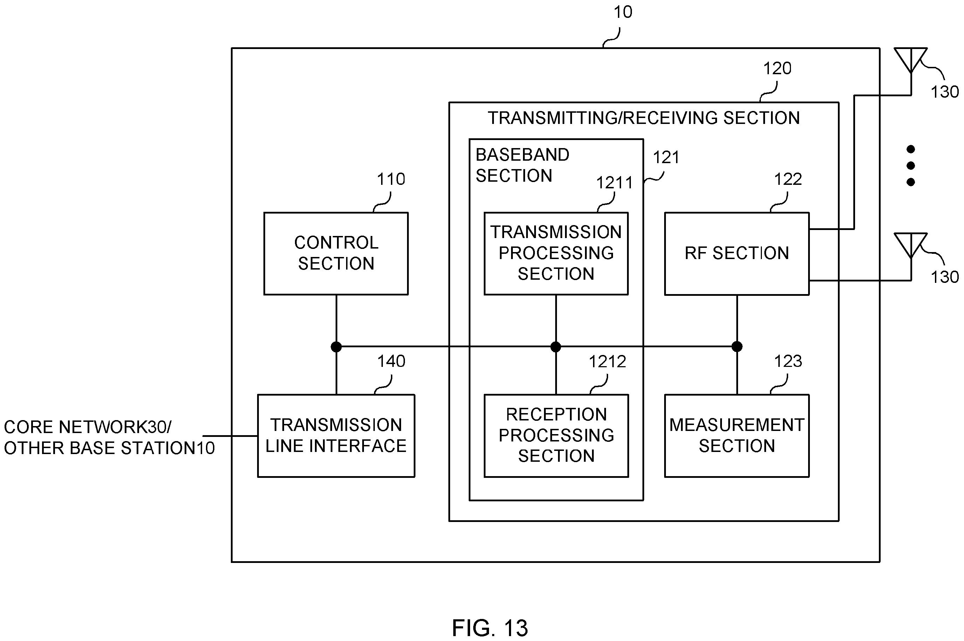

Fig. 13 is a diagram illustrating an example of a configuration of a base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmitting/receiving antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmitting/receiving antenna 130, or the transmission line interface 140.

The transmitting/receiving section 120 may transmit a notification of at least one of a radio resource control (RRC) information element (IE), a medium access control (MAC) control element (CE), and downlink control information (DCI). The control section 110 may control reception of a sounding reference signal (SRS) transmitted by using one or more parameters for transmission in one partial band of a plurality of partial bands obtained by dividing a band for the SRS. The one or more parameters may be determined on the basis of the notification. The one or more parameters may be at least one of the number of the plurality of partial bands, an index of the one partial band, and the start resource block index of the one partial band.

(User Terminal)

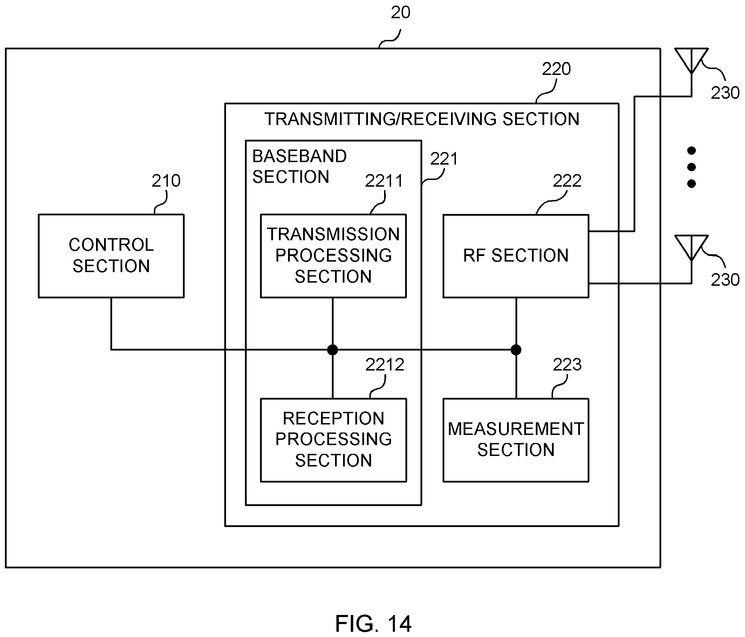

Fig. 14 is a diagram illustrating an example of a configuration of a user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (e.g., PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that, the transmitting section and the receiving section of the user terminal 20 in the present disclosure may include at least one of the transmitting/receiving section 220 and the transmitting/receiving antenna 230.

The transmitting/receiving section 220 may receive a notification of at least one of a radio resource control (RRC) information element (IE), a medium access control (MAC) control element (CE), and downlink control information (DCI). The control section 210 may determine, on the basis of the notification, one or more parameters for transmission in one partial band of a plurality of partial bands obtained by dividing a band for a sounding reference signal (SRS). The one or more parameters may be at least one of the number of the plurality of partial bands, an index of the one partial band, and the start resource block index of the one partial band.

The RRC IE may include a plurality of values of the one or more parameters. The control section 210 may determine one or more values among the plurality of values on the basis of at least one of the MAC CE and the DCI.

The control section 210 may perform switching between transmission in the one partial band and transmission in the band on the basis of the MAC CE.

The RRC IE may indicate an association between a plurality of states of the SRS triggering state and a plurality of values of the one or more parameters. The control section 210 may determine values of the one or more parameters on the basis of the state indicated using the DCI.

(Hardware Configuration)

Note that the block diagrams that have been used to describe the above embodiments illustrate blocks in functional units. These functional blocks (components) may be implemented in arbitrary combinations of at least one of hardware or software. In addition, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

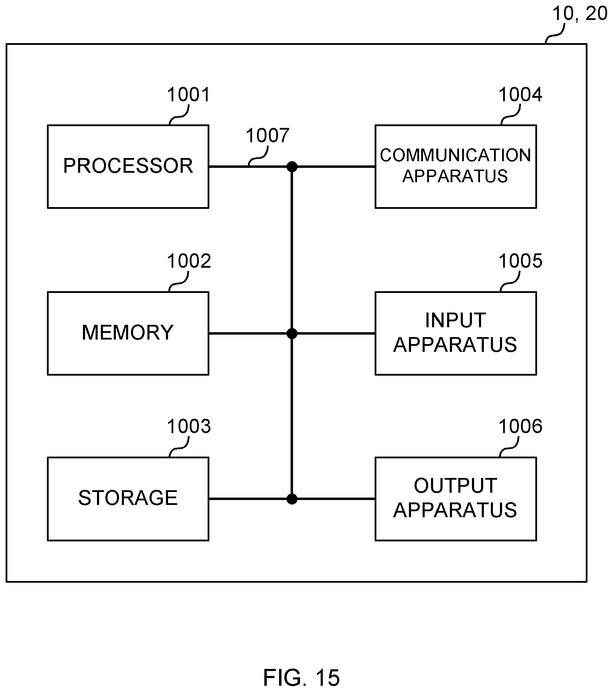

For example, the base station, the user terminal, and the like according to one embodiment of the present disclosure may function as a computer that executes the processing of the radio communication method of the present disclosure. Fig. 15 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. In addition, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

In addition, the processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as secondary storage apparatus.

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

In addition, these pieces of apparatus, including the processor 1001, the memory 1002 and so on are connected by the bus 1007 so as to communicate information. The bus 1007 may be formed with a single bus, or may be formed with buses that vary between pieces of apparatus.

In addition, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

(Modifications)

Note that terms described in the present disclosure and terms necessary for understanding the present disclosure may be replaced with terms that have the same or similar meanings. For example, a channel, a symbol, and a signal (signal or signaling) may be replaced with each other. In addition, the signal may be a message. The reference signal can be abbreviated as an RS, and may be referred to as a pilot, a pilot signal, and the like, depending on which standard applies. In addition, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). In addition, a slot may be a time unit based on numerology.

The slot may include a plurality of mini slots. Each mini slot may include one or more symbols in the time domain. In addition, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a minislot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe."

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. Note that when the TTI is given, a time interval (e.g., the number of symbols) to which a transport block, a code block, a codeword, or the like is actually mapped may be shorter than the TTI.

Note that, when one slot or one minislot is referred to as a "TTI", one or more TTIs (that is, one or multiple slots or one or more minislots) may be the minimum time unit of scheduling. In addition, the number of slots (the number of minislots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more consecutive subcarriers in the frequency domain. The number of subcarriers included in the RB may be the same regardless of the numerology, and may be twelve, for example. The number of subcarriers included in an RB may be determined based on a numerology.

In addition, an RB may include one or more symbols in the time domain, and may be one slot, one minislot, one subframe or one TTI in length. One TTI, one subframe, etc. may each be comprised of one or more resource blocks.

Note that one or more RBs may be referred to as a physical resource block (PRB), a subcarrier group (SCG), a resource element group (REG), a PRB pair, an RB pair, and the like.

In addition, a resource block may include one or more resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of radio frames, subframes, slots, minislots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

In addition, the information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

In addition, information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. In addition, the RRC signaling may be referred to as an RRC message, and may be, for example, an RRC connection setup message, an RRC connection reconfiguration message, and the like. In addition, notification of the MAC signaling may be performed using, for example, an MAC control element (CE).

In addition, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

In addition, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a wireless communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, terms such as "uplink" and "downlink" may be replaced with words corresponding to terminal-to-terminal communication (for example, "sidelink"). For example, an uplink channel, a downlink channel, and the like may be replaced with a sidelink channel.

Similarly, the user terminal in the present disclosure may be replaced with the base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. In addition, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. In addition, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

In addition, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, "determining" may be replaced with "assuming", "expecting", "considering", or the like.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

This application is based on Japanese Patent Application No. 2021-132415 filed on August 16, 2021. The contents of this are all incorporated herein.

**Claims**

1. A terminal comprising:

   a receiving section that receives a notification of at least one of a radio resource control (RRC) information element (IE), a medium access control (MAC) control element (CE), and downlink control information (DCI); and
   a control section that determines, on a basis of the notification, one or more parameters for transmission in one partial band of a plurality of partial bands obtained by dividing a band for a sounding reference signal (SRS), wherein
   the one or more parameters are at least one of a number of the plurality of partial bands, an index of the one partial band, and a start resource block index of the one partial band.

2. The terminal according to claim 1, wherein

   the RRC IE includes a plurality of values of the one or more parameters, and
   the control section determines one or more values among the plurality of values on a basis of at least one of the MAC CE and the DCI.

3. The terminal according to claim 1 or 2, wherein the control section performs switching between transmission in the one partial band and transmission in the band on a basis of the MAC CE.

4. The terminal according to any of claims 1 to 3, wherein

   the RRC IE indicates an association between a plurality of states of SRS triggering state and a plurality of values of the one or more parameters, and
   the control section determines values of the one or more parameters on a basis of a state indicated by using the DCI.

5. A radio communication method of a terminal, the method comprising:

   a step of receiving a notification of at least one of a radio resource control (RRC) information element (IE), a medium access control (MAC) control element (CE), and downlink control information (DCI); and
   a step of determining, on a basis of the notification, one or more parameters for transmission in one partial band of a plurality of partial bands obtained by dividing a band for a sounding reference signal (SRS), wherein
   the one or more parameters are at least one of a number of the plurality of partial bands, an index of the one partial band, and a start resource block index of the one partial band.

6. A base station comprising:

   a transmitting section that transmits a notification of at least one of a radio resource control (RRC) information element (IE), a medium access control (MAC) control element (CE), and downlink control information (DCI); and
   a control section that controls reception of a sounding reference signal (SRS) transmitted using one or more parameters for transmission in one partial band of a plurality of partial bands obtained by dividing a band for the SRS, wherein
   the one or more parameters are determined on a basis of the notification, and
   the one or more parameters are at least one of a number of the plurality of partial bands, an index of the one partial band, and a start resource block index of the one partial band.

| $C_{\mathrm{SRS}}$ | $B_{\mathrm{SRS}} = 0$ | | $B_{\mathrm{SRS}} = 1$ | | $B_{\mathrm{SRS}} = 2$ | | $B_{\mathrm{SRS}} = 3$ | |
|---|---|---|---|---|---|---|---|---|
| | $m_{\mathrm{SRS},0}$ | $N_0$ | $m_{\mathrm{SRS},1}$ | $N_1$ | $m_{\mathrm{SRS},2}$ | $N_2$ | $m_{\mathrm{SRS},3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| … | … | … | … | … | … | … | … | … |

FIG. 1

$m_{SRS,0}=48$ [RBs]

$B_{SRS}=0$

$m_{SRS,1}=24$ [RBs]

$B_{SRS}=1$

$N_1=1$

$m_{SRS,2}=12$ [RBs]

$B_{SRS}=2$

$N_2=2$

$m_{SRS,3}=4$ [RBs]

$B_{SRS}=3$

$N_3=3$

FIG. 2

FIG. 3

EP 4 391 688 A1

FIG. 4

EP 4 391 688 A1

FIG. 5

FREQUENCY

$m_{SRS,BSRS}[RB]$

$1/P_F * m_{SRS,BSRS}[RB]$

RPFS
SRS

$N_{offset} = k_F/P_F * m_{SRS,BSRS}[RB]$

$k_F = \{0, 1, ..., P_F-1\}$

TIME

FIG. 6

```
SRS-ResourceSet ::=    SEQUENCE {
    [...]
    resourceType              CHOICE {
        aperiodic                 SEQUENCE {
            aperiodicSRS-ResourceTrigger   INTEGER (1..maxNrofSRS-TriggerStates-1),
            csi-RS                         NZP-CSI-RS-ResourceId   OPTIONAL, -- Cond NonCodebook
            slotOffset                     INTEGER (1..32)         OPTIONAL, -- Need S

            ...,
            [[
            aperiodicSRS-ResourceTriggerList   SEQUENCE (SIZE(1..maxNrofSRS-TriggerStates-2))
                                               OF INTEGER (1..maxNrofSRS-TriggerStates-1)
                                               OPTIONAL  -- Need M
            P_F   INTEGER (1, 2, 3, 4, 8, 12, 16),
            k_F   INTEGER (1..16)
            ]]
        },
    [...]
```

FIG. 7

```
SRS-Resource ::=    SEQUENCE {
    [...]
    freqDomainPosition    INTEGER (0..67),
    freqDomainShift       INTEGER (0..268),
    freqHopping           SEQUENCE {
        c-SRS                 INTEGER (0..63),
        b-SRS                 INTEGER (0..3),
        b-hop                 INTEGER (0..3)
    },
    R_F    INTEGER (1, 2, 3, 4, 8, 12, 16),
    k_F    INTEGER (1..16)
    [...]
```

FIG. 8

EP 4 391 688 A1

## FIG. 9A

NEW MAC CE

| R | Serving Cell ID | | | BWP ID | Oct. 1 |
|---|---|---|---|---|---|
| R | R | R | P | SRS Resource Set ID | Oct. 2 |

## FIG. 9B

NEW MAC CE

| R | Serving Cell ID | | | BWP ID | Oct. 1 |
|---|---|---|---|---|---|
| R | R | R | R | SRS Resource Set ID | Oct. 2 |
| $P_F$ / $k_F$ indication | | | | | Oct. 3 |

## FIG. 10A

EXISTING MAC CE

| R | Serving Cell ID | | | | BWP ID | Oct. 1 |
| R | R | R | R | SRS Resource Set ID | | Oct. 2 |
| R | P | Pathloss Reference RS ID | | | | Oct. 3 |

## FIG. 10B

EXISTING MAC CE

| R | Serving Cell ID | | BWP ID | Oct. 1 |
| $k_F$ indication | | SRS Resource Set ID | | Oct. 2 |
| $P_F$ indication | Pathloss Reference RS ID | | | Oct. 3 |

FIG. 11A

| SRS request | SRS triggering state | SRS resource set(s) |
|---|---|---|
| 00 | 0 | No SRS triggering or #0 |
| 01 | 1 | #1 |
| 10 | 2 | #2 |
| 11 | 3 | #3, #4 |

FIG. 11B

| SRS resource set | SRS resource | $(P_F, k_F)$ |
|---|---|---|
| 0 | 0 | (4, 1) |
| 0 | 1 | (4, 2) |
| 1 | 2 | (8, 1) |
| 1 | 3 | (8, 2) |

30
CORE
NETWORK

1

C1

11

12a

12c

C2

C2

BACKHAUL
LINK

C2

20

12b

FIG. 12

FIG. 13

EP 4 391 688 A1

FIG. 14

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 15

| | | |
|---|---|---|
| **INTERNATIONAL SEARCH REPORT** | International application No. | |
| | **PCT/JP2022/030935** | |

**A.   CLASSIFICATION OF SUBJECT MATTER**

*H04W 72/20*(2023.01)i; *H04W 72/044*(2023.01)i
FI:   H04W72/04 136; H04W72/04 134

According to International Patent Classification (IPC) or to both national classification and IPC

**B.   FIELDS SEARCHED**

Minimum documentation searched (classification system followed by classification symbols)

H04W72/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | JP 2020-537437 A (LG ELECTRONICS INC) 17 December 2020 (2020-12-17) abstract, claims 1, 2, 5, paragraphs [0127]-[0239], fig. 13-26 | 1-6 |
| X | CN 111314039 A (SPREADTRUM COMMUNICATIONS SHANGHAI INC) 19 June 2020 (2020-06-19) abstract, claims 1, 2, paragraphs [0077]-[0121], fig. 1, 2 | 1-6 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 November 2022** | **22 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<div align="center">

**INTERNATIONAL SEARCH REPORT**
**Information on patent family members**

</div>

International application No.

**PCT/JP2022/030935**

| Patent document cited in search report | | | Publication date (day/month/year) | Patent family member(s) | | | Publication date (day/month/year) |
|---|---|---|---|---|---|---|---|
| JP | 2020-537437 | A | 17 December 2020 | US abstract, claims 1, 2, 5, paragraphs [0170]-[0277], fig. 13-26 WO EP CN | 2020/0235881 2019/074267 3687094 111480309 | A1 A1 A1 A | |
| CN | 111314039 | A | 19 June 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021132415 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010